# FASCICULE DE BREVET EUROPEEN

(11) **EP 0 546 936 B1**
(45) Date de publication et mention de la délivrance du brevet: **21.08.1996**
(21) Numéro de dépôt: 92403339.2
(22) Date de dépôt: 09.12.1992
(51) Int. Cl.: G02B 6/38

(54) **Dispositif pour la connexion réversible de fibres optiques et procédé pour la mise en oeuvre de ce dispositif**
Anordnung zur lösbaren Verbindung von Glasfasern und Verfahren zur Anwendung dieser Anordnung
Device for detachable connection of optical fibers and method of using this device

(30) Priorité: 13.12.1991 FR 9115494
(43) Date de publication de la demande: 16.06.1993
(73) Titulaire: RADIALL S.A., 93110 Rosny-Sous-Bois (FR)
(72) Inventeur: Lecomte, Fabrice, F-91300 Massy (FR); Valade, Norbert, F-93150 Le Blanc Mesnil (FR)
(74) Mandataire: Keib, Gérard

(56) Documents cités:
- EP-A- 0 215 696
- EP-A- 0 215 696
- EP-A- 0 339 876
- WO-A-88/05925
- US-A- 4 969 924

## Description

### Dispositif pour la connexion réversible de fibres optiques et procédé pour la mise en oeuvre de ce dispositif.

L'invention concerne un dispositif permettant d'établir, de façon réversible, la connexion entre deux fibres optiques portées par des fiches amovibles munies d'un système de rétention de la fibre dit "serre-fibre".

Le FR-A-2 586 304 décrit dans le détail un dispositif de ce type devant permettre d'effectuer des connexions répétées, sans précaution particulière à la manière d'une prise électrique ou d'un connecteur électrique enfichable. Malheureusement, l'expérience montre que les spécificités des fibres optiques (alignement et mise en butée des terminaisons) exigent une protection mécanique très stricte si l'on veut ménager la partie émergente des fibres à raccorder.

Or dans le dispositif selon le FR-A-2 586 304, l'extrémité dénudée de la fibre, tenue par le serre-fibre, lui-même emmanché dans la fiche amovible, fait saillie entre les deux fourches de la fiche. L'absence de protection extérieure rend ainsi la terminaison de la fibre particulièrement vulnérable notamment lors de l'introduction de la fiche dans l'embase. Cette vulnérabilité est d'ailleurs d'autant plus grande que la fiche ne comporte pas d'index spécifique de "détrompage" ce qui peut engendrer des erreurs de présentation préjudiciables aux terminaisons des fibres.

Enfin le système de verrouillage de la fiche sur l'embase, par glissière et saillie, est mal adapté aux connexions et déconnexions répétées en raison de la fragilité des parties de matière de section réduite mais de longue portée.

L'invention a pour but de remédier à ces inconvénients et concerne un dispositif permettant d'établir, de façon réversible, la connexion entre deux fibres optiques, le dispositif étant constitué :
- d'une embase en forme de fourreau dont chacune des extrémités est pourvue d'un conduit à glissière de guidage incliné vers une partie dite inférieure de l'embase et convergeant en direction du plan médian transversal de l'embase, qui comporte un organe de guidage en V pour recevoir et aligner les terminaisons dénudées des fibres,
- de deux fiches amovibles coopérant avec les glissières de guidage de l'embase et comportant un canal central longitudinal débouchant à l'arrière de la fiche dans une cavité destinée à recevoir un serre-fibre , et comportant à l'avant un orifice , de diamètre réduit, dont l'axe est coaxial à celui du canal central mais décalé par rapport à celui de la cavité arrière, lesdites fiches étant prolongées à l'avant par une fourche dont les deux branches sont munies de crans de verrouillage,
- d'un serre-fibre pour chaque fibre, moulé dans un matériau élastique et assurant le bridage de la partie gainée de la fibre emmanché à force dans la cavité arrière de la fiche,
- d' un organe presseur enfichable vers le bas dans le plan médian transversal de l'embase pour d'une part, verrouiller les fiches par manoeuvre d'un levier en position de connexion, et d'autre part, favoriser le contact entre les terminaisons des fibres alignées et aboutées dans l'organe de guidage en V de l'embase,
dispositif caractérisé en ce que chacune de ces deux fiches comporte en outre un fourreau protecteur de fiche, pourvu d'une part de moyens d'accouplement complémentaires avec sa fiche respective d'autre part, d'organes de guidage et d'indexation avec l'embase, ledit fourreau étant mobile en translation axiale par rapport à la fiche pour pouvoir prendre successivement au moins deux positions :
- une position "accouplée" avec la fiche, avant son introduction dans l'embase, pour caréner sa partie avant fourchue où fait saillie la terminaison de la fibre,
- une position "rétractée" lorsque la fiche est totalement enfoncée dans l'embase, position où la face frontale arrière du fourreau est en butée sur la tête de la fiche, et
- en ce que la paroi avant frontale du fourreau protecteur est pourvue d'une double lumière pour le passage des deux branches de la partie fourchue de la fiche et d'un orifice central de passage de la fibre.

La paroi avant frontale du fourreau protecteur est pourvue d'une double lumière pour le passage des deux branches de la partie avant fourchue de la fiche et d'un orifice de passage de la fibre. De la sorte, les fourches de verrouillage traversent le fourreau et sont, par là-même, protégées, et la fibre coulisse dans l'orifice axial du fourreau lors du déplacement de la fiche en translation axiale par rapport au fourreau et à l'embase.

Selon un mode de réalisation avantageux, le fourreau protecteur est de section quadrangulaire et comporte sur la face interne de ses deux parois latérales une rainure anti-retour dans laquelle vient s'encliqueter un cran de verrouillage prévu sur chacune des deux faces latérales de la fiche, et sur sa paroi de fond, au niveau de son bord avant, une lèvre élastique d'indexage sur l'embase.

Selon une autre caractéristique avantageuse de l'invention, le fourreau est pourvu sur la face externe de sa paroi supérieure, d'une rainure de repérage et sur la face interne de sa paroi de fond, d'une encoche en forme de boutonnière pour recevoir un téton d'accouplement, solidaire de la fiche.

Selon une variante préférée, la fiche comporte, par exemple sur la face opposée à celle pourvue du têton d'accouplement, une languette souple sur laquelle fait saillie un bossage transversal. La rétraction de la fiche dans le fourreau s'effectue automatiquement sans nécessiter de ressort, par la mise en butée de la languette souple sur la paroi lors du recul de la fiche.

L'invention s'étend également au procédé de montage et d'accouplement du dispositif de connexion selon l'invention.

D'autres caractéristiques et avantages ressortiront de la description ci-après et des dessins annexés dans lesquels :
- la figure 1 est une vue en coupe longitudinale du dispositif de connexion selon l'invention, équipé de deux fiches dont l'une est en position de connexion, l'autre déconnectée,
- la figure 2 est une vue en perspective éclatée des divers éléments constituant le dispositif de connexion selon l'invention, disposés selon leur position d'accouplement respective,
- les figures 3 et 4 sont des vues en perspective illustrant la position relative du fourreau protecteur sur la fiche dans ses deux positions "accouplée" (fig.3) et "rétractée" (fig. 4),
- les figures 5 et 6 sont des vues en perspective analogues aux figures 3 et 4, sous un angle différent,
- les figures 7 et 8 sont des vues en coupe illustrant respectivement la position accouplée et rétractée du fourreau protecteur et son verrouillage sur l'embase.

L'objet essentiel de l'invention réside dans la conception d'un nouveau dispositif de connexion de fibres qui, tout en favorisant un excellent contact interface de terminaisons de fibres, soit d'une bonne résistance mécanique et autorise ainsi de multiples connexions et déconnexions sans nuire à sa longévité.

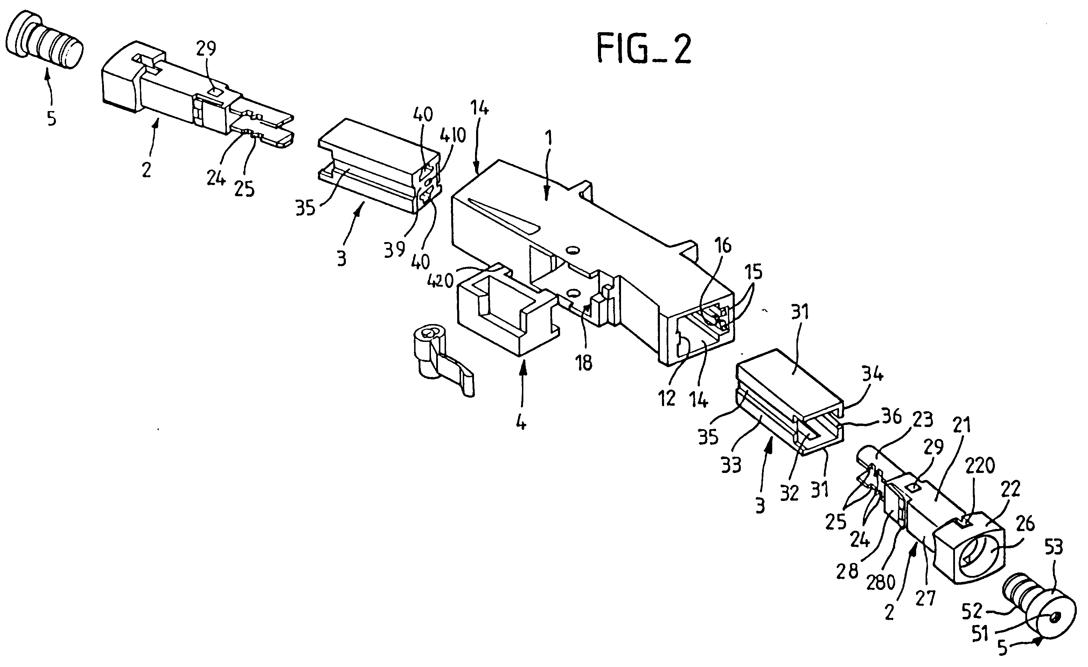

Comme visible en figure 2, le dispositif est essentiellement constitué d'une embase 1, de deux fiches amovibles porte-fibres 2, associée chacune à un fourreau de protection 3, d'un organe presseur 4 coopérant avec l'embase 1, et enfin, de serre-fibre 5 destinés à être emmanchés par l'arrière dans la tête des porte-fibres 2.

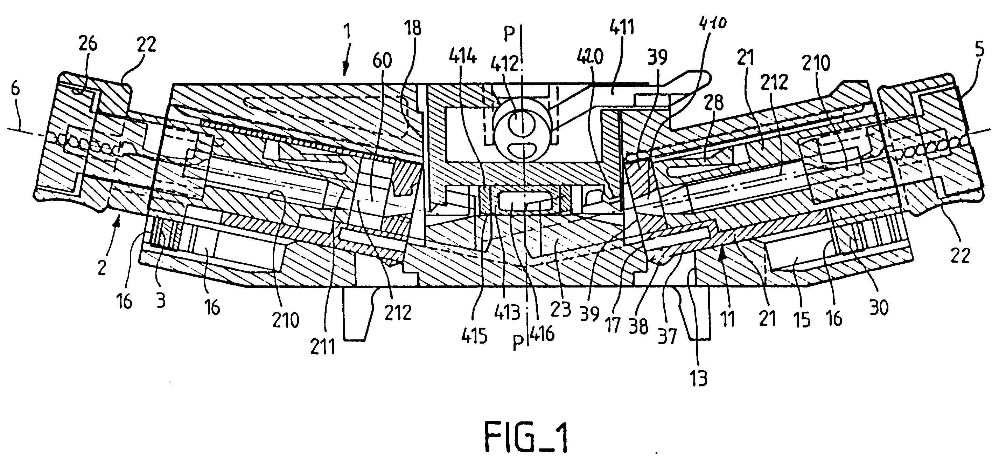

Dans le détail, l'embase 1 se présente sous la forme d'un fourreau, ici de section quadrangulaire, de structure sensiblement symétrique de part et d'autre du plan médian transversal P (figure 1). Cette embase comportant, au droit de ce plan, un organe de guidage en forme de V tel que décrit dans le FR-A-2 586 304, chacune des deux parties située de part et d'autre du plan médian P comportant un conduit ou glissière 11 incliné et convergeant vers ce plan médian transversal pour guider et positionner les fiches porte-fibres 2. Ces conduits sont ouverts vers le haut dans leur région arrière pour permettre l'introduction et le guidage des fiches 2 et comporte, dans le prolongement de leurs glissières, une surface évasée en forme de dièdre pour permettre, au moment où la fibre sera introduite dans le dispositif, de la recentrer et de l'orienter correctement pour parfaire son positionnement. Ces détails de construction sont clairement décrits et représentés dans le brevet FR-A-2 586 304.

On va maintenant décrire la structure de chacune des fiches 2 en référence notamment aux figures 2 et 4 à 6.

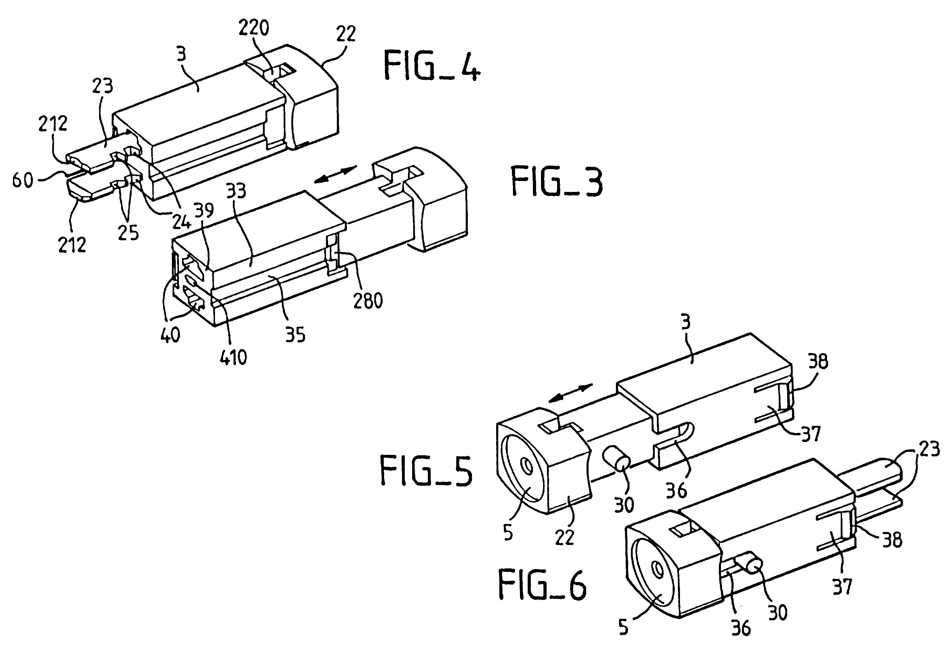

Chacune des fiches 2 se présente sous la forme d'un corps 21 prolongé à son extrémité arrière par une tête en saillie 22, et à sa partie avant par deux branches parallèles 23 définissant une fourche, ces branches comportant sur l'une de leurs arêtes, des crans de verrouillage 24 et 25 particulièrement visibles en figure 4. La tête 22 des fiches est évidée pour définir une cavité circulaire 26 apte à recevoir le serre-fibre 5. Enfin, cette fiche possède, sur l'une de ses faces 27, au voisinage de son extrémité avant, en aval de la partie fourchue 23, une languette souple 28 (figures 1, 2 et 8) et sur la paroi externe de ses deux faces latérales opposées, un cran de verrouillage 29 en forme de harpon. Enfin, la face opposée à celle où est située la lèvre souple 28 est pourvue d'un téton d'accouplement 30 dont le rôle sera explicité ultérieurement.

Comme visible en coupe sur la figure 1, la fiche 2 comporte un canal central 210, orienté longitudinalement, débouchant à son extrémité arrière dans la cavité circulaire 26 de réception du serre-fibre. L'extrémité avant de ce canal se termine par un orifice 211, de plus faible diamètre, dont l'axe 212 est coaxial à celui du canal central 210, lequel est décalé légèrement par rapport à l'axe de la cavité 26 servant de siège au serre-fibre 5. Cette disposition est destinée à imposer à la partie émergente dénudée de la terminaison de la fibre 6, une orientation préférentielle après insertion du serre-fibre 5 dans la cavité 26 de la fiche. Ce prépositionnement va permettre, lorsque la fiche sera ensuite introduite dans l'embase, de faire en sorte que la partie extrême de la terminaison de la fibre vienne se positionner dans le siège en V de l'embase.

Le serre-fibre 5 est avantageusement constitué de deux demi-coquil les pourvues d'un alésage axial 51 (figure 2), pour le passage de la section gainée de la fibre, cet orifice traversant à la fois le corps 52 du serre-fibre et la tête 53 qui vient se loger dans la cavité 26 de la fiche 2. Le serre-fibre est réal isé dans un matériau d'élasticité suffisante, pour qu'après insertion dans la cavité 26, la fibre soit parfaitement bridée par serrage entre les deux demi-coquil les réunies. On peut, pour parfaire le maintien de la fibre, prévoir sur la tête 53 du serre-fibre des ergots en saillie venant se loger dans des orifices borgnes ou des ouvertures 220 (figure 2).

L'invention porte plus particulièrement sur le fourreau protecteur 3, visible isolément en figure 2 et en association avec les fiches sur les figures de 4 à 6. Ce fourreau se présente sous la forme d'un manchon de section quadrangulaire dont la paroi interne des deux faces latérales 31 est pourvue d'une rainure anti-retour 32 coopérant par encliquetage avec les crans de verrouillage 29 des fiches 2, de forme complémentaire. Les deux autres faces 33 et 34 du fourreau sont respectivement pourvues d'une part, d'une rainure longitudinale traversante 35, évitant les erreurs de manipulation, coopérant avec une nervure homologue 12 en saillie à l'intérieur de l'embase 1, et d'autre part, d'une encoche 36, en forme de boutonnière, orientée dans l'axe médian du fourreau et destinée à coopérer avec le téton 30 de la fiche correspondante.

Enfin le fourreau comporte dans le prolongement de la boutonnière 36 mais sur le bord opposé avant, une lèvre élastique 37 dont l'arête extérieure est pourvue d'un bossage en saillie 38 servant à l'indexation et au verrouillage positif du fourreau protecteur dans l'embase 1 qui comporte à cet effet une ouverture traversante 13 (figure 1).

La face frontale avant 39 du fourreau protecteur est traversée par deux lumières 40 autorisant le libre passage des branches 23 de la partie avant fourchue de la fiche 2 ainsi qu'un orifice central 410 pour le passage de l'extrémité dénudée de la terminaison de la fibre 6.

Le montage et l'accouplement des divers éléments ci-dessus décrits s'effectuent de la façon suivante.

On introduit en premier lieu la fibre optique 6 dans l'orifice 51 du serre-fibre 5 en faisant émerger, en aval de cette pièce, l'extrémité de la fibre. On introduit ensuite à force, le serre-fibre 5 dans la cavité 26 de la fiche 2 en prenant soin d'engager l'extrémité dénudée 60 de la terminaison de fibre dans le canal 210 de la fiche. On clive ensuite la fibre au ras des extrémités 212 des branches 23 de la partie fourchue de la fiche (fig. 4), en faisant en sorte que le plan de fracture soit le plus proche possible de cette extrémité. A ce stade, on emboîte la fiche 2 dans son fourreau protecteur respectif en alignant (ce qui constitue un excellent repérage) le téton d'accouplement 30 de la fiche avec l'encoche 36 en forme de boutonnière du fourreau (figure 5). Le fourreau se déplace en translation axiale sur le corps 21 de la fiche jusqu'à ce que les crans de verrouillage 29 viennent s'encliqueter dans les rainures anti-retour 32 ménagées sur les faces internes des parois latérales 31 dudit fourreau. Cette étape (figure 5) correspond à la position dite "accouplée" du fourreau avec sa fiche respective puisque, à ce stade, les deux pièces sont solidaires et forment un ensemble unitaire pouvant être déplacé d'un seul bloc.

La fiche équipée de son fourreau protecteur est engagée dans l'une des extrémités de l'embase 1, cette introduction étant facilitée par les moyens de "détrompage" constitués par la rainure 35 et sa nervure associée 12 (figure 2). Les deux conduits 11 de l'embase 1 destinés à recevoir respectivement une fiche munie de son manchon protecteur comportent sur la face interne opposée à celle où fait saillie la nervure 12, une paire de rails de guidage 15 pourvus chacun de deux encoches de verrouillage 16 situées en regard l'une de l'autre. Ces deux rails, en saillie sur la paroi interne des conduits 14 de l'embase définissent entre eux une voie de guidage dont la largeur correspond sensiblement au diamètre du téton d'accouplement 30 porté par le corps 21 de la fiche 2, lequel téton glisse à force entre les deux rails et vient ainsi se verrouiller au fur et à mesure de l'introduction de l'ensemble unitaire, fiche/fourreau protecteur, dans l'une des deux encoches 16 desdits rails.

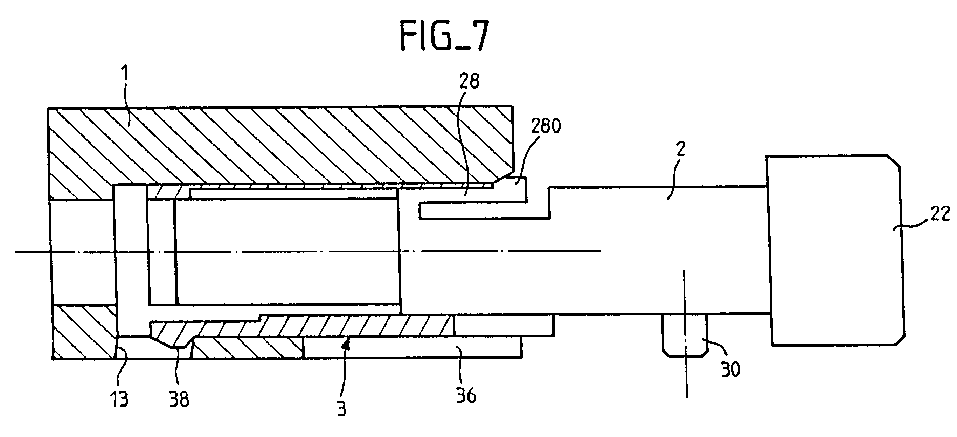

L'introduction de la fiche dans l'embase est à double détente. La première course de l'ensemble unitaire fiche/fourreau protecteur, correspond à la butée de la face frontale avant 39 du fourreau contre le fond 17 des conduits 11 de l'embase. A ce stade, le fourreau 3 reste dans la position "accouplée" avec la fiche 2 et son arête en saillie 38, solidaire de la lèvre élastique 37 est verrouillée dans l'ouverture 13 de l'embase, comme visible figure 7. La languette souple 28 de la fiche 2 est, quant à elle, en butée par son arrêtoir 280 contre la tranche arrière du fourreau 3. Cette position correspond au schéma de la figure 7 mais également à la position de la fiche 2 par rapport au fourreau 3, tel que visible sur les figures 3 et 5.

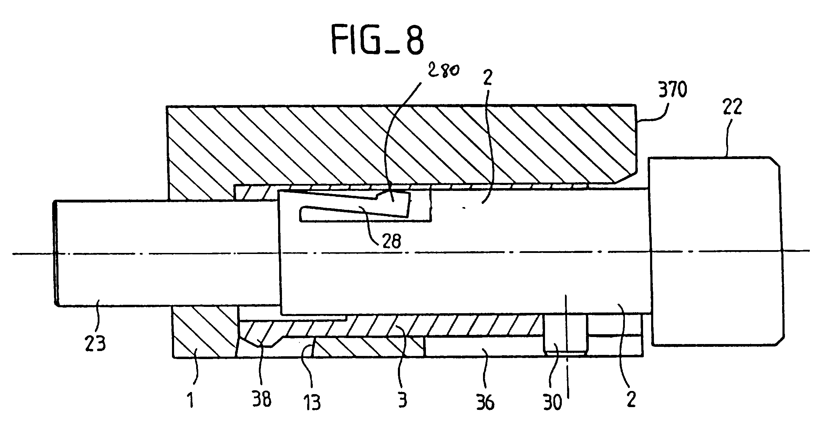

Lorsque l'on poursuit l'introduction de la fiche 2 dans l'embase, il se produit un déplacement relatif de ladite fiche par rapport à son fourreau protecteur 3, lui-même immobilisé par butée frontale dans le corps de l'embase. C'est ainsi que seule la fiche se déplace en translation axiale, par rapport au fourreau et à l'embase en traversant par ses branches 23 (constituant la partie avant fourchue où se trouve la partie dénudée de la terminaison de la fibre), les lumières 40 de la face frontale avant du fourreau, la fibre quant à elle, coulissant dans l'orifice central 410 dudit fourreau. L'orifice central 410 peut être de forme oblongue et/ou de section conique. Au cours de son déplacement, comme illustré en figure 8, l'arrêtoir 280 de la languette 28 de la fiche s'est effacé pour pouvoir coulisser à l'intérieur du fourreau et le téton d'accouplement 30 de ladite fiche est venu se loger dans la boutonnière 36 du fourreau 3. La partie émergente de ce téton a, quant à elle, coulissé entre les deux rails 15 de l'embase, et est venue s'encliqueter par simple élasticité en l'une des deux gorges 16 dont sont pourvus lesdits rails. Cette position du fourreau protecteur dite "rétractée" apparaît clairement en figure 8 où l'on observe que la face frontale arrière 370 du fourreau 3 est pratiquement en appui contre la tête 22 de la fiche 2.

La figure 1 montre clairement, sur la partie située à droite du plan médian transversal P, la position respective de la fiche et de son fourreau protecteur par rapport à l'embase, lorsque ce dernier est dans la position rétractée de la figure 8. On observe en effet que le fourreau 3 est pratiquement en appui sur la tête 22 de la fiche et que les branches 23 de la partie fourchue de ladite fiche font saillie par rapport à la face frontale avant 39 du fourreau et enfin que l'arête d'extrémité 212 desdites branches 23 est rigoureusement dans l'alignement du plan médian transversal P de l'embase. On voit enfin que l'arrêtoir 38 de la lèvre élastique 37 du fourreau 3 est verrouillé dans l'ouverture 13 de l'embase 1 et que la languette 28 de la fiche est effacée à l'intérieur dudit fourreau. On observe encore que le téton 30 de la fiche est verrouillé dans la gorge 16 des rails 15, située la plus proche du plan médian transversal P.

La partie de gauche, située de l'autre côté du plan médian transversal P correspond à une position intermédiaire où le fourreau de protection 3 est immobilisé axialement mais, les deux branches 23 de la partie fourchue de la fiche sont éloignées du plan médian transversal P. A ce stade, les fibres sont déconnectées mais la fiche est en position d'attente, son téton d'accouplement 30 étant verrouillé dans la première encoche 16 située la plus en amont du plan de rencontre des extrémités des fibres. Une nouvelle poussée sur fiche amènera celle-ci, après déverrouillage de l'organe presseur 4, dans la position connectée de la fiche, telle que représentée sur la partie droite du dessin de la figure 1 pour que les extrémités 212 des branches des deux fiches viennent en contact l'une de l'autre pour assurer un interface rigoureux entre les terminaisons de chacune des deux fibres portée sa fiche respective.

Pour parfaire la continuité du milieu optique, le dispositif comprend, comme dans le brevet FR-A-2 586 304, un organe presseur 4 inséré verticalement dans la cheminée 18 de l'embase 1, celui-ci ayant pour effet, en premier lieu, de verrouiller en place les fiches dans l'embase. A cet effet, l'embase comprend un bossage 420 coopérant avec les encoches 24 et 25 réalisées sur la tranche des branches 23 de la partie fourchue des fiches. L'encoche 24 sert au verrouillage des fiches en position de connexion (position illustrée sur la partie droite de la figure 1), c'est-à-dire la position dans laquelle les extrémités 212 des branches de la fiche sont en butée et que la liaison optique entre les deux fibres est établie. Le verrouillage en cette position empêche donc le retrait de la fiche hors de l'embase tant que le système n'est pas déverrouillée. L'encoche 25 permet quant à elle de verrouiller la fiche 2 dans une position de déconnexion (position illustrée sur la partie gauche de la figure 1) empêchant le retrait hors de l'embase de la fiche, cette position étant obtenue par un léger déplacement en arrière de la fiche depuis la position de connexion. Le verrouillage et le déverrouillage de l'organe presseur sont réalisés par un levier 411 actionnant un excentrique 412, la position visible en figure 1 correspondant à l'état verrouillé puisque le bossage 420 est effectivement en appui positif dans la gorge 24 des branches 23 de la fourche.

L'organe presseur a également pour fonction de plaquer les extrémités des fibres au fond du siège en V de l'embase pour les immobiliser en position. Cette fonction est obtenue, comme dans le brevet FR-A-2 586 304 par un élément élastique déformable 413 dont est pourvue la base de l'organe presseur 4, cet élément jouant le rôle de coussin élastique pour appliquer les terminaisons des fibres contre le siège interne de l'embase.

Selon une caractéristique avantageuse de l'invention, cet élément élastique déformable 413 qui a sensiblement la forme d'un parallélépipède rectangle, est entouré sur ses quatre faces d'une bague périphérique 414 réalisée, elle aussi, dans un matériau suffisamment élastique et compressible pour pouvoir s'écraser lors de la pression appliquée à l'organe 4 par le levier 411 et son excentrique 412, la bague 414 débordant légèrement par son bord avant 415 de l'élément élastique déformable 413 de manière à entrer en contact avec les fibres avant ledit élément élastique. Pour parfaire la continuité du milieu optique, on introduit dans la cavité 416 de l'élément élastique déformable 413, qui sert de réservoir, une goutte de liquide ayant le même indice de réfraction que le matériau constituant le coeur de la fibre optique, cette réserve de liquide fluent dans l'interstice compris entre l'élément élastique 413 et la bague d'étanchéité 415 lors de la pression exercée sur l'organe presseur 4 par le levier 411. Ainsi, ce liquide se répand sur les extrémités des terminaisons de fibres améliorant de façon sensible la continuité optique.

Le dispositif de connexion tel qu'il vient d'être décrit présente de multiples avantages.

D'une part, il permet une protection périphérique et permanente de l'extrémité dénudée des fibres optiques tout au long de leur introduction dans l'embase, le fourreau de protection s'éclipsant uniquement après la mise en place de la fiche dans ladite embase,
- le concept de fabrication exclut les zones ou les sections de matière fragiles et vulnérables, pouvant aisément casser lors de connexions et déconnexions répétées, ce qui accroît sensiblement la longévité du dispositif,
- les verrouillages respectifs fiches/fourreau protecteur ou ensemble unitaire fiche/fourreau protecteur et embase sont indexés et positifs.

La complémentarité des rainures et nervures de guidage favorise la mise en place des unités fiche/fourreau protecteur sans risque d'erreur de manipulation.
- la bague d'étanchéité 414 entourant l'élément élastique de l'organe presseur 4 et la présence d'un liquide ayant le même indice de réfraction que le matériau constituant le coeur de la fibre optique favorisent la continuité du milieu optique.

## Revendications

1. Dispositif permettant d'établir, de façon réversible, la connexion entre deux fibres optiques, le dispositif étant constitué :
- d'une embase (1) en forme de fourreau dont chacune des extrémités est pourvue d'un conduit à glissière de guidage (11) incliné vers une partie dite inférieure de l'embase (1) et convergeant en direction du plan médiant transversal (P) de l'embase, qui comporte un organe de guidage en V pour recevoir et aligner les terminaisons dénudées (60) des fibres (6),
- de deux fiches amovibles (2) coopérant avec les glissières de guidage (11) de l'embase et comportant un canal central longitudinal (210) débouchant à l'arrière de la fiche (2) dans une cavité (26) destinée à recevoir un serre-fibre (5) et comportant à l'avant un orifice (211), de diamètre réduit, dont l'axe est coaxial à celui du canal central (210) mais décalé par rapport à celui de la cavité arrière (26), lesdites fiches étant prolongées à l'avant par une fourche dont les deux branches (23) sont munies de crans de verrouillage (24, 25),
- d'un serre-fibre (5) pour chaque fibre, moulé dans un matériau élastique et assurant le bridage de la partie gainée de la fibre (6) emmanché à force dans la cavité arrière (26) de la fiche (2),
- d' un organe presseur (4) enfichable vers le bas dans le plan médian transversal (P) de l'embase (1) pour d'une part, verrouiller les fiches (2) par manoeuvre d'un levier (411) en position de connexion, et d'autre part, favoriser le contact entre les terminaisons des fibres alignées et aboutées dans l'organe de guidage en V de l'embase (1),
dispositif caractérisé en ce que chacune de ces deux fiches comporte en outre un fourreau (3), protecteur de fiche, pourvu d'une part de moyens d'accouplement complémentaires (29, 32) avec sa fiche respective (2), d'autre part, d'organes de guidage (35) et d'indexation (37, 38) avec l'embase (1), ledit fourreau étant mobile en translation axiale par rapport à la fiche pour pouvoir prendre successivement au moins deux positions :
- une position "accouplée" avec la fiche, avant son introduction dans l'embase, pour caréner sa partie avant fourchue où fait saillie la terminaison (60) de la fibre (6),
- une position "rétractée" lorsque la fiche (2) est totalement enfoncée dans l'embase (1), position où la face frontale arrière du fourreau est en butée sur la tête (22) de la fiche (2), et
- en ce que la paroi avant frontale (39) du fourreau protecteur (3) est pourvue d'une double lumière (40) pour le passage des deux branches (23) de la partie fourchue de la fiche (2) et d'un orifice central (410) de passage de la fibre (6).

2. Dispositif selon la revendication 1, caractérisé en ce que le fourreau protecteur (3) est de section quadrangulaire et comporte sur la face interne de chacune de ses deux parois latérales (31) une rainure anti-retour (32) dans laquelle vient s'encliqueter un cran de verrouillage (29) prévu sur chacune des deux faces latérales (21) de la fiche (22) et sur sa paroi de fond, au niveau de son bord avant, une lèvre élastique d'indexage (37, 38) sur l'embase (1).

3. Dispositif selon la revendication 2, caractérisé en ce que le fourreau (3) est pourvu, sur la face externe de sa paroi supérieure, d'une rainure de repérage (35) et sur sa paroi inférieure, d'une encoche (36) en forme de boutonnière, pour recevoir un téton d'accouplement (30) solidaire de la fiche (2).

4. Dispositif de connexion selon la revendication 1, caractérisé en ce que la fiche (2) comporte, sur la face opposée à celle pourvue du téton d'accouplement (30), une languette souple (28) sur laquelle fait saillie un bossage transversal (280).

5. Dispositif selon la revendication 1, caractérisé en ce que l'embase comporte sur chacune de ses glissières (11) deux rails parallèles (15) définissant entre eux une rainure de guidage pour le téton de l'accouplement (30), ces rails présentant sur leur face en regard deux gorges de verrouillage (16) pour immobiliser ce téton dans la position connectée ou déconnectée des fibres.

6. Dispositif selon la revendication 1, caractérisé en ce que l'organe presseur (4) est pourvu d'un élément élastique (413) pour le positionnement et l'application des fibres sur le siège interne de l'embase (1), cet élément étant entouré par une bague compressible d'étanchéité (414) dont le bord externe (415) fait légèrement saillie par rapport au sommet de cet élément (413).

7. Dispositif selon la revendication 6, caractérisé en ce que l'élément élastique presseur (413) est évidé et sert de réservoir (416) à un liquide de nature à favoriser la continuité du milieu optique, ce liquide ayant le même indice de réfraction que celui du matériau constituant le coeur de la fibre.

8. Procédé de montage et d'accouplement du dispositif de connexion conforme aux revendications 2 et 7, caractérisé en ce que l'on procède successivement aux opérations suivantes :
- on introduit la partie gainée de la fibre optique (6) dans le serre-fibre (5) que l'on emmanche à force et verrouille dans la cavité (26) de la fiche (2),
- on dénude et on clive la fibre (6) au droit de l'extrémité des deux branches (23) de la partie fourchue de la fiche (2),
- on introduit la fiche (2) ainsi équipée de sa fibre (6) dans son fourreau de protection respectif (3) par un déplacement axial relatif de l'un par rapport à l'autre jusqu'à ce que les crans de verrouillage (29) de la fiche s'encliquettent dans les rainures anti-retour correspondantes (32) du fourreau (3), ce qui correspond à la position "accouplée" fiche/fourreau protecteur,
- on introduit l'ensemble unitaire fiche/fourreau, ainsi formé, dans l'une des glissières (11) de l'embase (1) jusqu'à butée de la face frontale avant (39) du fourreau sur le fond (17) de cet embase (1),
- on poursuit alors l'introduction de la fiche (2) qui se déplace par rapport au fourreau (3) alors immobilisé, de manière à amener les arêtes (212) des branches (23) de la partie avant fourchue de la fiche dans le plan médian transversal (P) de l'embase,
- on engage enfin l'organe presseur (4), préalablement pourvu de son liquide de contact, dans la cheminée (18) de l'embase (1), puis on manoeuvre le levier (411) pour provoquer par l'excentrique (412) d'une part le verrouillage des fiches (2), par insertion du bossage (410) de l'organe presseur dans les crans de verrouillage (24) des branches (23) des fiches (2), d'autre part, l'écrasement relatif de l'élément élastique (413) et de la bague d'étanchéité (414) qui lui est associée, tout en obtenant le fluage du liquide de contact depuis l'interstice annulaire compris entre ces deux éléments (413, 414), vers les terminaisons des fibres, pour créer un milieu de continuité optique au niveau des terminaisons des fibres.

## Patentansprüche

1. Vorrichtung zur Herstellung einer lösbaren Verbindung zwischen zwei Glasfasern, umfassend:
- einen hülsenförmigen Grundkörper (1), dessen Enden jeweils mit einem Führungskanal (11) versehen sind, der zu einem unteren Abschnitt des Grundkörpers (1) geneigt ist und in Richtung der Mittelquerebene (P) des Grundkörpers zusammenläuft, welcher eine V-förmige Führungseinrichtung zum Aufnehmen und Ausrichten der abgemantelten Enden (60) der Fasern (6) umfaßt,
- zwei abnehmbare Stecker (2), die mit den Führungskanälen (11) des Grundkörpers zusammenwirken und einen Mittel-Längskanal (210) aufweisen, der hinter dem Stecker (2) in einen zur Aufname einer Faserklemme (5) dienenden Hohlraum (26) mündet und der vorn eine Öffnung (211) mit vermindertem Durchmesser aufweist, deren Achse mit derjenigen des Mittelkanals (210) koaxial, jedoch gegenüber derjenigen des hinteren Hohlraums (26) versetzt ist, wobei die Stecker nach vorn über eine Gabel verlängert sind, deren beide Arme (23) mit Verriegelungsrasten (24, 25) versehen sind,
- eine aus einem elastischen Material geformte Faserklemme (5) für jede Faser, die das Festklammern des abgemantelten Abschnitts der Faser (6) sicherstellt und die kraftschlüssig in den hinteren Hohlraum (26) des Steckers (2) eingesteckt ist,
- eine Preßeinrichtung (4), die nach unten an der Mittelquerebene (P) des Grundkörpers (1) einführbar ist, um einerseits die Stecker (2) durch Betätigung eines Hebels (411) in Verbindungsstellung festzulegen und um andererseits den Kontakt zwischen den Enden der fluchtenden und aneinanderstoßenden Fasern in der V-förmigen Führungseinrichtung des Grundkörpers (1) zu unterstützen,
dadurch gekennzeichnet, daß jeder dieser beiden Stecker weiterhin eine Steckerschutzhülse (3) aufweist, die einerseits mit dem jeweiligen Stecker (2) zugeordneten Kopplungseinrichtungen (29, 32) und andererseits mit Einrichtungen zur Führung (35) und Verriegelung (37, 38) mit dem Grundkörper (1) versehen ist, wobei die Hülse gegenüber dem Stecker axial verschiebbar ist, um nacheinander mindestens zwei Stellungen einzunehmen:
- eine vor dem Einführen in den Grundkörper mit dem Stecker "gekoppelte" Stellung zum Abdecken von dessen vorderem, gegabeltem Abschnitt, an dem das Ende (60) der Faser vorsteht,
- eine "zurückgezogene" Stellung, wenn der Stecker (2) völlig in den Grundkörper (1) eingesteckt ist, in der die vordere Stirnseite der Hülse an dem Kopf (22) des Steckers (2) anliegt, und
- daß die vordere Stirnwand (39) der Schutzhülse (3) mit einer doppelten Durchführungsöffnung (40) zum Durchlaß der beiden Arme (23) des gegabelten Abschnitts des Steckers (2) und mit einer mittleren Durchlaßöffnung (410) für die Faser (6) versehen ist.

2. Vorrichtung nach Anspruch 1, dadurch gekennzeichnet, daß die Schutzhülse (3) im Querschnitt viereckig ist und auf der Innenfläche jeder ihrer beiden Seitenwände (31) eine Rückdrehsicherungsnut (32), in welche eine auf jeder der beiden Seitenflächen (21) des Steckers (22) vorgesehene Verriegelungsraste (29) einschnappt, und an ihrer Bodenwand in Höhe ihrer Vorderkante eine elastische Lippe (37, 38) zur Verriegelung mit dem Grundkörper (1) aufweist.

3. Vorrichtung nach Anspruch 2, dadurch gekennzeichnet, daß die Hülse (3) auf der Außenfläche ihrer oberen Wand mit einer Führungsnut (35) und an ihrer unteren Wand mit einer länglichen Einkerbung (36) versehen ist, um den mit dem Stecker (2) einstückig ausgebildeten Kopplungsansatz (30) aufzunehmen.

4. Verbindungsvorrichtung nach Anspruch 1, dadurch gekennzeichnet, daß der Stecker (2) auf der Seite gegenüber der mit dem Kopplungsansatz (30) versehenen Seite eine elastische Zunge (28) aufweist, auf welcher ein Querwulst (280) vorspringt.

5. Vorrichtung nach Anspruch 1, dadurch gekennzeichnet, daß der Grundkörper an jedem seiner Führungskanäle (11) zwei parallele Schienen (15) aufweist, die zwischen sich eine Führungsnut für den Kopplungsansatz (30) begrenzen, wobei diese Schienen auf ihrer gegenüberliegenden Seite zwei Verriegelungsrillen (16) zur Festlegung dieses Ansatzes in der Faserverbindungs- oder -trennungsstellung aufweisen.

6. Vorrichtung nach Anspruch 1, dadurch gekennzeichnet, daß die Preßeinrichtung (4) mit einem elastischen Element (413) zum Positionieren und Anbringen der Fasern an der inneren Aufnahme des Grundkörpers (1) versehen ist, wobei dieses Element von einem zusammendrückbaren Dichtungsring (414) umgeben ist, dessen äußerer Rand (415) gegenüber dem Scheitel dieses Elements (413) leicht vorspringt.

7. Vorrichtung nach Anspruch 6, dadurch gekennzeichnet, daß das elastische Anpreßelement (413) ausgehöhlt ist und als Behälter (416) für eine die Kontinuität des optischen Bereiches unterstützende Flüssigkeit dient, wobei diese Flüssigkeit denselben Brechungskoeffizienten wie das den Kern der Faser bildende Material hat.

8. Verfahren zur Montage und Kopplung der Verbindungsvorrichtung nach den Ansprüchen 2 und 7, dadurch gekennzeichnet, daß nacheinander die folgenden Schritte durchgeführt werden:
- der ummantelte Abschnitt der Glasfaser (6) wird in die kraftschlüssig in den Hohlraum (26) des Steckers (2) eingesteckte Faserklemme (5) eingeführt,
- die Faser (6) wird im rechten Winkel zu dem Ende der beiden Arme (23) des gegabelten Abschnitts des Steckers (2) abgemantelt und gespalten,
- der so mit der Faser (6) versehene Stecker (2) wird in die jeweilige Schutzhülse (3) durch axiales Verschieben des ersteren gegenüber der letzteren eingeführt, bis die Verriegelungsrasten (29) des Steckers in die entsprechenden Rückdrehsicherungsnuten (32) der Hülse (3) einschnappen, was der Stecker/Schutzhülsen-"Kopplungs"-Stellung entspricht,
- die so gebildete Stecker/Hülsen-Einheit wird in einen der Führungskanäle (11) des Grundkörpers (1) bis zum Anschlag der vorderen Stirnfläche (3) der Hülse am Boden (17) dieses Grundkörpers (1) eingeführt,
- es erfolgt nun das Einführen des Steckers (2), der sich gegenüber der nun festgelegten Hülse (3) in der Weise verschiebt, daß die Kanten (212) der Arme (23) des gegabelten vorderen Abschnitts des Steckers die Mittelquerebene (P) des Grundkörpers erreichen,
- schließlich wird die zuvor mit der Kontaktflüssigkeit versehene Preßeinrichtung (4) in den Schacht (18) des Grundkörpers (1) eingebracht, dann wird der Hebel betätigt, damit über den Exzenter (412) einerseits die Verriegelung der Stecker (2) durch Einsetzen des Wulstes (410) der Preßeinrichtung in die Verriegelungsrasten (24) der Arme (23) der Stecker (2) und andererseits das relative Zusammendrücken des elastischen Elements (413) und des diesem zugeordneten Dichtungsrings (414) bewirkt werden, wobei der Fluß der Kontaktflüssigkeit von dem zwischen den beiden Elementen (413, 414) gebildeten Ringraum zu den Enden der Fasern zur Schaffung eines kontinuierlichen optischen Bereiches an den Enden der Fasern erfolgt.

## Claims

1. Device for the detachable connection of two optical fibres, said device comprising:
- a seat assembly (1) in the form of a sleeve, each of the ends of which being provided with a guideway (11) inclined towards the perceived lower portion of the seat assembly (1) and converging in the direction of the transverse central plane (P) of the seat assembly which comprises a V-shaped guide member to receive and align the bare ends (60) of the fibres (6);
- two detachable connectors (2) cooperating with the guideways (11) of the seat assembly and comprising a longitudinal central channel (210) feeding to the rear of the connector (2) into a cavity (26) provided to receive a fibre grip means (5) and comprising an opening (211) at the front with a reduced diameter, the axis of which is coaxial to that of the central channel (210), but offset relative to that of the rear cavity (26), said connectors being extended at the front by a fork, the two branches (23) of which are fitted with locking catches (24, 25);
- a fibre grip means (5) for each fibre moulded in an elastic material and to ensure clamping of the sheathed portion of the fibre (6) forcibly fitted into the rear cavity (26) of the connector (2);
- a pressing member (4) which may be inserted downwards into the transverse central plane (P) of the seat assembly (1), on the one hand to lock the connectors (2) into the connecting position by manipulation of a lever (411), and on the other hand to facilitate contact between the ends of the fibres aligned and joined end to end in the V-shaped guide means of the seat assembly (1);
said device being characterised in that each of these two connectors additionally comprises a sleeve (3) to protect the connector which is provided with additional coupling means (29, 32) for its respective connector (2) as well as members for guiding (35) and indexing (37, 38) the seat assembly (1), said sleeve being axially displaceable in relation to the connector so that it may successively assume at least two positions:
- a position where it is "coupled" to the connector prior to its insertion into the seat assembly for smoothing out its portion before the forked section where the end (60) of the fibre (6) forms a projection;
- a "retracted" position where the connector (2) is fully embedded in the seat assembly (1) and where the rear face of the sleeve abuts against the head (22) of the connector (2), and
that the front wall (39) of the protective sleeve (3) is provided with a double aperture (40) for the passage of two branches (23) of the forked portion of the connector (2) and with a central opening (410) for passage of the fibre (6).

2. Device according to Claim 1, characterised in that the protective sleeve (3) has a quadrangular cross-section and on the inside face of each of its two side walls (31) has a non-return groove (32), into which engages a locking catch (29) provided on each of the two side faces (21) of the connector (22), and on its bottom wall at the level of its front edge has an elastic indexing lip (37, 38) on the seat assembly (1).

3. Device according to Claim 2, characterised in that on the outside face of its upper wall, the sleeve (3) is provided with a locating groove (35), and on its lower wall has a buttonhole-shaped elongated recess (36) to receive a coupling lug (30) integral to the connector (2).

4. Connection device according to Claim 1, characterised in that on the opposite face to that provided with the coupling lug (30), the connector (2) has a flexible tongue (28) on which a transverse protrusion (280) projects.

5. Device according to Claim 1, characterised in that the seat assembly has two parallel rails (15) on each of its guideways (11) which between them define a guide groove for the coupling lug (30), said rails having on their opposing faces two locking grooves (16) to immobilise said lug in the position where the fibres are connected or disconnected.

6. Device according to Claim 1, characterised in that the pressing member (4) is provided with an elastic element (413) for positioning and application of the fibres on the internal seat of the seat assembly (1), said element being enclosed by a compressible sealing ring (414), the outside edge (415) of which projects slightly in relation to the top of this element (413).

7. Device according to Claim 6, characterised in that the elastic pressing element (413) is hollow and serves as a reservoir (416) for a liquid suitable for promoting continuity of the optical environment, said liquid having the same index of refraction as that of the material forming the core of the fibre.

8. Process for the assembly and coupling of the connection device according to Claims 2 to 7, characterised in that the procedure comprises the following operations in succession:
- the sheathed portion of the optical fibre (6) is introduced into the fibre grip means (5) which is forcibly fitted and locked in the cavity (26) of the connector (2);
- the fibre (6) is stripped and divided straight to the end of the two branches (23) of the forked portion of the connector (2);
- the connector (2), thus equipped with its fibre (6), is inserted in its respective protective sleeve (3) by axially displacing one in relation to the other until the locking catches (29) of the connector engage into the corresponding non-return grooves (32) of the sleeve (3), this corresponding to the "coupled" position of the connector/protective sleeve;
- the connector/sleeve assembly unit thus formed is inserted into one of the guideways (11) of the seat assembly (1) until the front face (39) of the sleeve abuts against the base (17) of this seat assembly (1);
- insertion of the connector (2) then proceeds, and said connector shifts in relation to the sleeve (3), which is thus immobilised, so as to bring the stops (212) of the branches (23) of the forked front portion of the connector into the transverse central plane (P) of the seat assembly;
- the pressing member (4), which has first been provided with its contact liquid, is then engaged in the outlet (18) of the seat assembly (1), then the lever (411) is manipulated to achieve by means of the cam (412) the locking of the connectors (2) by inserting the protrusion (410) of the pressing member into the locking catches (24) of the branches (23) of the connectors (2), on the one hand, and the relative compression of the elastic element (413) and the sealing ring (414) associated with it, on the other hand, and thus causing the contact liquid to flow from the annular cavity contained between these two elements (413, 414) towards the ends of the fibres to create a continuous optical environment in the area of the ends of the fibres.
